# EUROPEAN PATENT SPECIFICATION

(11) **EP 0 983 669 B1**
(45) Date of publication and mention of the grant of the patent: **26.07.2006**
(21) Application number: 98949188.1
(22) Date of filing: 02.11.1998
(51) Int. Cl.: H04L 12/56, H04Q 11/04

(54) **COMMUNICATION NETWORK WITH INCREASED ROUTING FLEXIBILITY**
ÜBERTRAGUNGSNETZ MIT ERHÖHTER ROUTINGFLEXIBILITÄT
RESEAU DE COMMUNICATION A SOUPLESSE D'ACHEMINEMENT AMELIOREE

(30) Priority: 04.11.1997 EP 97203416
(43) Date of publication of application: 08.03.2000
(73) Proprietor: Koninklijke Philips Electronics N.V., 5621 BA Eindhoven (NL)
(72) Inventor: VAN DRIEL, Carel, Jan, Leendert, NL-5656 AA Eindhoven (NL)
(74) Representative: Deguelle, Wilhelmus H. G.
(86) International application number: PCT/IB1998/001746
(87) International publication number: WO 1999/022567

(56) References cited:
- EP-A2- 0 696 154
- EP-A2- 0 793 398
- WO-A1-96/04729
- US-A- 5 467 349
- US-A- 5 526 414
- US-A- 5 581 552
- US-A- 5 623 688

## Description

The present invention is related to a communication network comprising a plurality of secondary nodes being coupled to a primary node, said primary node being arranged for transmitting packets to a secondary node according to address information in said packets.

The present invention is also related to a node for use in such a communication network and a communication method.

A communication network according to the preamble is known from the conference paper "A Hybrid Multiplexing Scheme for Multi-Service Networks" published in the proceedings of SPIE conference on Broadband Access Networks, Vol. 2917, Boston, November 1996.

Another communication network according to the preamble is known from WO 96/04729, which discloses a network switch comprising an address translation unit for translating Ethernet messages via internal protocol messages into ATM messages or vice versa.

There is an increasing interest in switched broadband networks to offer various services to subscribers connected to such networks. Possible services are Broadcast TV, Video on Demand, Video conferencing, telephony and fast Internet access. One of the most promising solutions for realizing such a network is a so-called Hybrid Fiber Coax (HFC) network. Standardization of these broadband networks is done in IEEE802.14, DVB and DAVIC.

In order to provides services having quite different properties such networks can be based on ATM. In ATM the information to be transmitted is subdivided in fixed length packets with a 5 byte header and a 48 byte payload area. The 5 byte header comprises several items such as address information.

The address information comprises two address parts, the Virtual Path Identifier (VPI) with a length of 12 bits and the Virtual Channel Identifier (VCI) with the length of 16 bits. In the communication network according to the above mentioned conference presentation this address information is used to address the secondary nodes. Because the VPI is often used for network internal purposes, only the VCI is available for addressing the individual secondary nodes.

With a VCI field of 16 bits, the maximum number of secondary nodes is 64000. Because subscriber premises can have several secondary nodes, such as one or more telephones, a digital TV set and a PC this maximum number of 64000 is far too low.

An object of the present invention is to provide a communication network according to the preamble having an increased number of secondary nodes which can be addressed.

To achieve said object, the communication network according to the invention is characterized in that the communication network comprises address translating means for determining from a part of the address information a translated address part having a larger address space than said part of the address information, and in that the communication network comprises routing means to route the packet according to the information in the translated address part.

By translating a part of the address information (e.g. the VCI) into a translated address part having a larger address space (e.g. the address space of VPI and VCI together) it becomes possible to address more secondary nodes without having to make more bits available for addressing. The making of more bits available for addressing is impossible in an already defined standard such as ATM. The translation of a part of the address information can be easily be performed by a table providing the translated address in response to the first part of the address information.

An embodiment of the communication network according to the invention is characterized in that the primary node is arranged for receiving packets including address information identifying the secondary node and in that the primary node comprises further address translating means for translating said address information into the address information comprising a first part indicating a transmission resource and a second part indicating the secondary node.

This embodiment of the communication network allows it to be interfaced to a core network in which the secondary nodes are addressed in a standard way. Such a core network could be a public ATM network. The address assigned to a secondary terminal in such a core network is translated into an address suitable for use in the network according to the invention. By identifying the transmission resource by a first part of the address information, the signal can be directed into the proper part of the network. The second part of the address information can be used to direct the further routing in the network.

A further embodiment of the communication network according to the invention is characterized in that the communication network comprises additional address translating means for translating the translated address part back into the address information present in the packets received by the primary node.

By introducing additional address translating means for translating the translated address part back into the address information present in the packets received by the primary node, it is obtained that the communication network according to the invention is fully transparent between the input of the primary node and the output for the secondary node.

A further embodiment of the communication network according to the invention is characterized in that the communication network comprises intermediate nodes between the primary node and the secondary nodes; and in that the intermediate node comprise the additional address translation means.

By positioning the additional address translation means in an intermediate node, this address translation means can be in the vicinity of a plurality of secondary nodes. This allows the network specific address information to be used in the complete network except the connections to the core network and the connections to the secondary nodes.

A still further embodiment of the invention is characterized in that the communication network comprises cross connect means for passing packets to a transmission resource indicated by the first part of the address information, and in that the further address translating means are arranged for translating the address information before the packets are applied to the cross connect means.

By translating the address information before the packets are applied to the cross connect the opportunity arises to use the part of the address information for indicating a transmission resource to control the cross connect to route the packet into an appropriate direction.

The invention will now be explained with reference to the drawings. Herein shows:
Fig. 1 a communication network in which the invention can be applied;
Fig. 2 the downstream elements in a communication network according to the invention;
Fig. 3, a diagram explaining the address translations to which an ATM cell is subjected when it is transmitted from the core network 2 to the terminal 46;
Fig. 4, the upstream elements in a communication network according to the invention;
Fig. 5, a diagram explaining the address translations to which an ATM cell is subjected when it is transmitted from the terminal 46 to the core network 2;

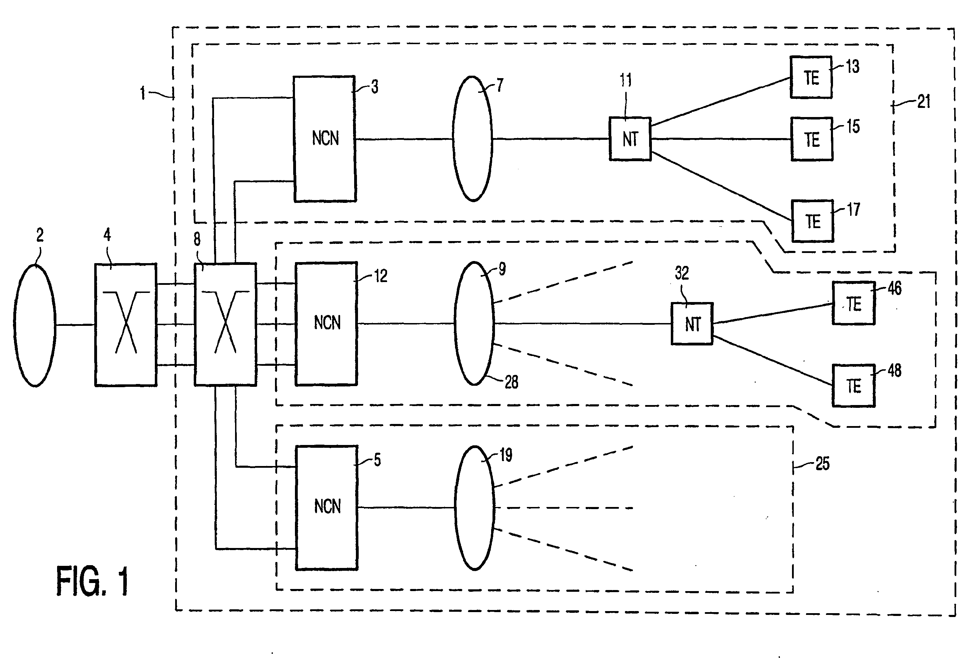

The communication network according to Fig. 1 comprises an access network 1 which is connected to a core network 2 via a switch 4. The access network comprises a plurality of service areas 21, 23 and 25. The switch 4 is coupled to said service areas 21, 23 and 25 via a cross-connect 8. Each of the service areas 21, 23 and 25 comprises a corresponding Network Control Node 3, 12 and 5 respectively. The network control nodes 3, 12 and 5 are coupled to a HFC network which normally comprises a shared transmission network 7, 9 and 19 such as a CATV coax network.

The Network Control Nodes transform the signals received from the cross connect 8 into signals modulated on separate carriers for transmission into the corresponding HFC network. In the HFC network a number of carriers e.g. 128 are available for transmission signals to the network terminations (NT) .One of these network terminations 11 is drawn in Fig. 1. Each NT is arranged for receiving one of said carriers used in the HFC network. The network termination 11 is arranged for passing the signals received from the HFC network to the terminals 13, 15 and 17. In each service area the same carrier frequencies can be used because there is no connection between the HFC networks of different service areas.

The network terminations 11 and 32 are arranged for passing signals from their terminals 13, 15, 17 and 46, 48 respectively via an upstream carrier via the HFC network 7, 9 to the corresponding Network Control Node 3, 12. In order to be able to use the HFC network for upstream transmission an access protocol such as described in IEEE 802.14, DVB or DAVIC should be used.

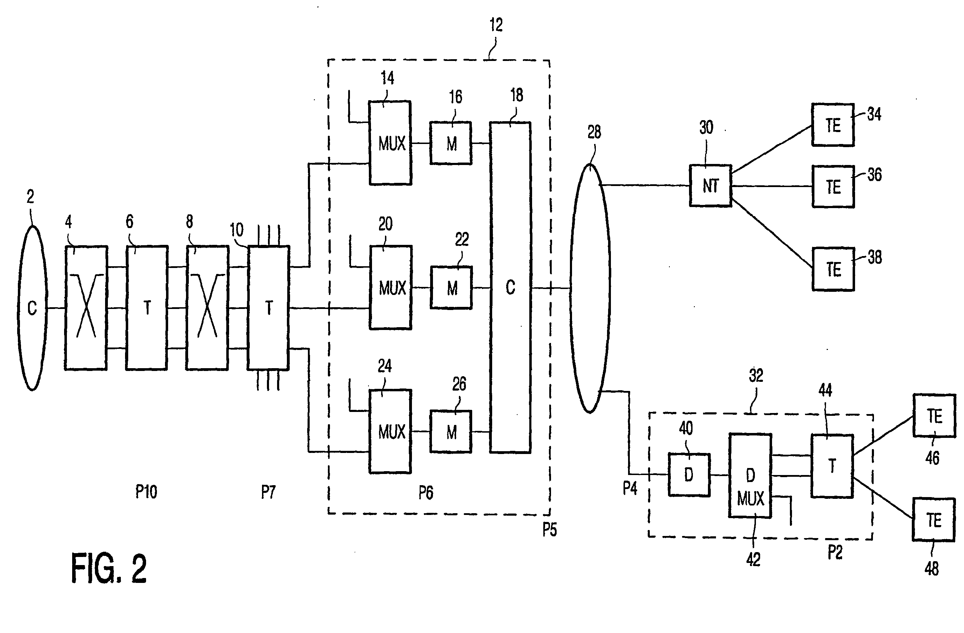

In Fig. 2, the downstream elements used in the network according to Fig. 1 are drawn in more detail. The core network 2 is a public broadband network which can be based on ATM. The switch 4 is arranged for setting up connections between subscribers connected to the core network and subscribers connected to the access network 1. The switch 4 is also arranged for setting up local connections between subscribers both connected to the access network 1. The address information contained in the ATM cells entering and leaving the switch 4 is according to the addressing scheme used on the core network 2.

The switch 4 is further connected to a cross-connect 8 which is arranged for directing the ATM cells into the proper parts in the access network. In order to enable the cross connect to direct the ATM cells to the proper parts of the network, at an interface P10 the address of the ATM cell is translated by the further translation means, being here a translator 6. The address carried by ATM cells at the input of the translator 6 is translated into an address comprising a VPI identifier identifying the service area to which the cell should be routed and which carrier should be used in said service area. This translation is performed by reading a table which is addressed with the original VPI/VCI identifier of the ATM packet.

The table in translator 6 is updated each time a connection is set up or is disconnected. During the set up of a call a table entry with input value the VPI/VCI identifier of the terminal to be called is added. The corresponding output value comprises information about the service area and the carrier to be used in the VPI field, and an identification of the terminal to be addressed in the VCI field.

The cross connect 8 reads the VPI field of the incoming ATM packets, and routes it to an output determined by the VPI value. All outputs of the cross connect 8 are passed to the address translating means according to the inventive concept, being here an address translation unit 10. The address translation unit 10 replaces the combination of VPI/VCI by a new combination of VPI/VCI which is determined from the original VCI value only. This translation enables a more flexible addressing, because a larger address space is available.

In the new combination of VPI/VCI, the VPI field is used to address the network terminator to which the destination terminal is connected. The VCI field identifies the destination terminal.

The ATM packet with the translated address information, is passed via a multiplexer 14 to a modulator in the service area having a predetermined carrier frequency. The selection of the service area and the modulator (is selection of carrier frequency) therein is done on basis of the output VPI value at interface P10. The multiplexer 14 is present to enable the Network Control Node 12 to transmit control information to the corresponding Network Termination. The output signal of the selected modulator (e.g. 22) is combined with the output signals of the other modulators (e.g. 22 and 26) and transmitted via the coax network 28 to the network terminations 30, 32.

The network terminations 30, 32 demodulate and process the signal received at the carrier frequency assigned to them. In the network termination 32 a demodulator 42 demodulates the signal received from the HFC network 28. A demultiplexer 42 connected to the demodulator 40 extracts control information intended for control of the Network Termination 32. A plurality of outputs of the demultiplexer 42 is connected to the additional address translating means, being here an address translator 44. This address translator 44 translates the VPI/VCI combination introduced by the address translator 10 into the addresses as they were received from the core network. Subsequently the packets are transmitted to the terminals 46 and 48.

If the VPI field is 12 bits and the VCI is 16 bits as is the case for ATM cells for use on Network Node Interfaces 12 bits are available for identifying the Service Area and the carrier frequency to be used therein. If the network comprises 32 service areas, 128 carrier frequencies can be defined. For each of the service areas 12 bits are available for identifying the network termination and 16 bits are available for identifying the terminal. Consequently 4096 network terminations and 65536 terminals can be addressed in each service area.

Without the address translation at interface P10, 16 bits would be available for addressing the network terminations and the terminals. If in such a case 4096 NT had to be addressed, only 16 terminals could be selected with the remaining address space. Consequently only 16 terminals could be connected to one Network Termination. By using the address translation according to the invention 65536 terminals can be in a connection, without any constraint to the network termination they are connected to.

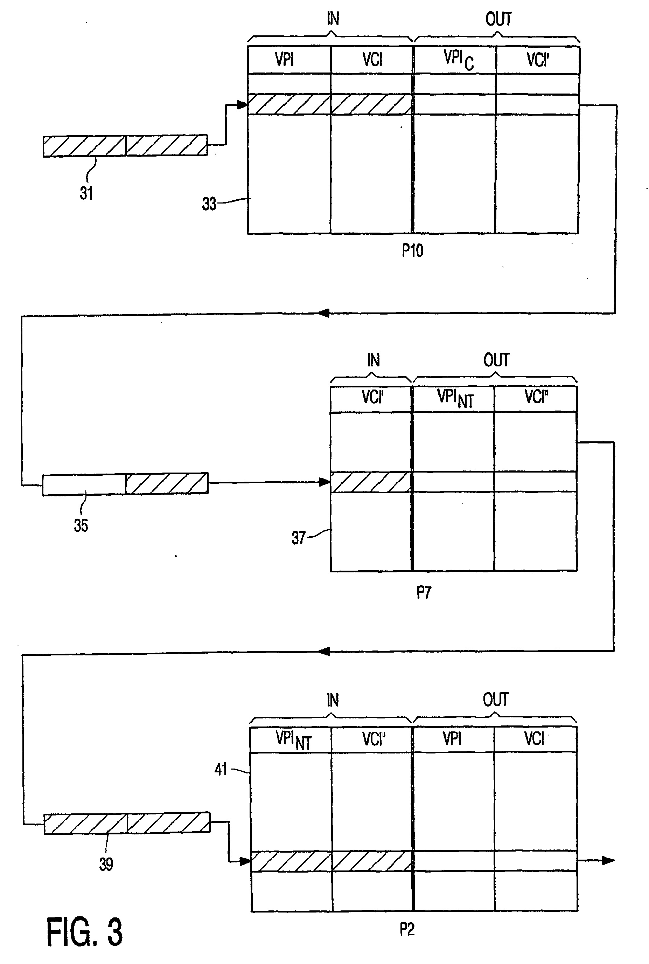

Fig. 3 shows the sequence of address translation to which an ATM packet is subjected when traveling from the core network to a terminal. A packet from the core network 2 has a VPI/VPI part 31 as is shown in Fig. 3. At the interface P10 this VPI/VCT part is translated into a VPI_{C}/VCI' part 35. This translation is performed by addressing a table 33 with the VPI/VCI part as input signal and reading the VPI_{C}/VCI' part from the output of the table 33. The table 33 is held by the translation means 6 in Fig. 2. As can be seen in Fig. 3 the complete address information VPI/VCI is used for addressing the table 33.

The VPI_{C} part of the address information 35 is used to route the ATM packet to the proper service area and modulator. The VCI' part of the address information is used as input for the translation of the address information at interface P7. The VCI' part is used to address a table 37 from which the translated address information VPI_{NT}/VCI" is read. The table 37 is held in the translation means 10 in Fig. 2. The part VPI_{NT} indicates the address of the NT to which the destination terminal is connected, and the part VCI" indicates the address of the destination terminal.

The combination 39 of the address information VPI_{NT}/VCI" is used as input for the address translation at interface P2. Said combination of VPI_{NT}/ VCI" is used to address a table 41 which is held in the translator 44 in Fig. 2. At the output of the table the VPI/VCI combination according to the addressing scheme of the core network is available for addressing the terminal.

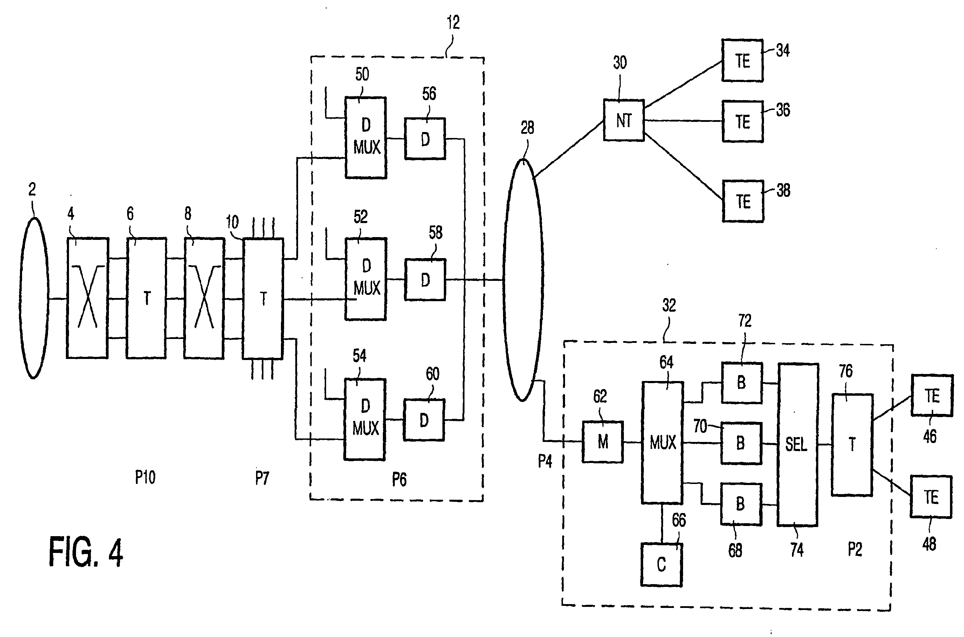

Fig. 4 shows the elements involved with the upstream transmission for a communication network according to Fig. 1. An ATM packet originated at a terminal 46 or 48 is applied to an address translator 76. The address translator 76 in the network termination 32 translates the original address information VPI/VCI into translated address information VPI_{NT}/VCI_{PRIOR}.
The part VPI indicates the Network Termination 32 via which the packet is transmitted. According to an aspect of the present invention, the part VCI_{PRIOR} indicates the Quality of Service with which the ATM packet has to be transmitted. A selector 74 selects the ATM packets received from the translator 76 and passes them to one of the buffers 68, 70 or 72 according to their VCI_{PRIOR} indicator. The buffer 68 can be assigned to a Constant Bitrate QoS (CBR) with a high bitrate, the buffer 70 can be assigned to a Constant Bitrate QoS (CBR)with a medium bitrate, and the buffer 72 can be assigned to a Variable Bitrate (VBR) QoS.

A CBR QoS with high bitrate is e.g. suitable for transmission of video signals, a CBR QoS with medium bitrate is e.g. suitable for transmission of audio signals, and a VBR QoS is suitable for the transmission of data which occurs e.g. with file transfer. The ATM packets at the output of the buffers 68, 70 and 72 are multiplexed with a multiplexer 64 into an output stream. The multiplexer takes the different QoS properties of the output signals of the buffers 68, 70 and 72 into account, by transmitting the packets according to a priority which is dependent on the buffer from which the packet is read. It is clear that the buffers carrying CBR signals have a higher priority than the buffers carrying VBR signals. Amongst the buffers carrying CBR signals, the buffers assigned to high bitrate streams have the highest priority. Besides the signals from the buffers 68, 70 and 72, also a control signal from the network termination 32 is applied to an input of the multiplexer, in order to be transferred to the network control node 12.

The output signal of the multiplexer 64 is modulated by a modulator 62 on a carrier with a frequency which is assigned to the network termination 32. The network termination 32 transmits the output signal of the multiplexer 62 via the network 28 to the network control node 12. In the network control node, the signal received is demodulated in one of the demodulators 56, 58 or 60 and demultiplexed by a corresponding demultiplexer 50, 52 or 54. The control information from the network termination 32 is available at a separate output of the demultiplexer for further use in the network control node 12.

The outputs of the demultiplexers 50, 52 and 54 are connected to corresponding inputs of an address translator 10. This address translator translates the combination of VPI_{NT}/VCI_{PRIOR} into new address information VPI_{OUT}/VCI'. This translation is obtained by reading a table entry using the VCI_{PRIOR} indication as entry. The ATM cells at the output of the address translator 10 are passed by the crossconnect 8 to one of its outputs according to the VPI_{OUT} indicator of the ATM packet. The outputs of the cross connect 8 are connected to corresponding inputs of address translation means 6. The address translating means 6 translates the combination of VPI_{OUT}/VCI' into the original destination address VPI/VCI of the packet. The packet with the original address VPI/VCI is transferred to the switch 4 in order to transmit the packet to the core network 2.

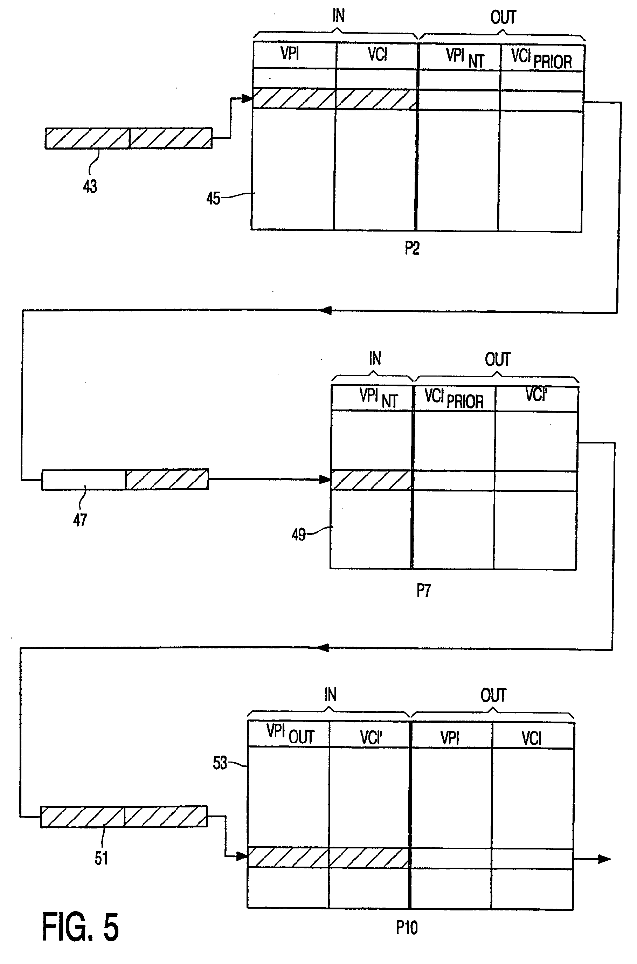

Fig. 5 shows schematically the sequence of address translation to which an ATM packet is subjected when traveling from a terminal 46 or 48 to the core network. A packet from the terminal 46 or 48 has a VPI/VCI part 43 as is shown in Fig. 5. At the interface P2 this VPI/VCT part is translated into a VPI_{NT}/VCI_{PRIOR} part 47. This translation is performed by addressing a table 45 with the VPI/VCI part as input signal and reading the address information VPI_{NT}/VCI_{PRIOR} from the output of the table 45. The table 45 is held by the translation means 76 in Fig. 5. As can be seen in Fig. 5 the complete address information VPI/VCI is used for addressing the table 45.

The VPI_{PRIOR} part of the address information 47 is used to route the ATM packet to the Network Control Node 12 via a path being able to provide transmission according to the proper Quality of Service indicated by the address part VCI'. The VCI' part of the address information is used as input for the translation of the address information.

At interface P7, the VCI' part of the address information 47 is used to address a table 49 from which the translated address information VPI_{OUT}/VCI' is read. The table 49 is held in the translation means 10 in Fig. 4. The part VPI_{OUT} indicates the output of the cross connect 8 to which the packet should be transferred.

The combination 51 of the address information VPI_{OUT}/VCI' is used as input for the address translation at interface P10. Said combination of VPI_{OUT}/ VCI' is used to address a table 53 which is held in the translator 6 in Fig. 5. At the output of the table 53 the VPI/VCI combination according to the addressing scheme of the core network is available for submitting the packet to the switch 4.

It is observed that the address translation at the interfaces P10, P7 and P2 are very similar for upstream and downstream. This enables that the translation units 6, 10 and 76 can be used for downstream and upstream traffic.

## Claims

1. Communication network comprising a plurality of secondary nodes being coupled to a primary node, said primary node being arranged for transmitting packets to a secondary node according to address information in said packets, **characterized in that** the communication network comprises address translating means (10) for determining from a part of the address information a translated address part having a larger address space than said part of the address information, and **in that** the communication network comprises routing means to route the packet according to the information in the translated address part.

2. Communication network according to claim 1, **characterized in that** the primary node is arranged for receiving packets including address information identifying the secondary node and **in that** the primary node comprises further address translating means (6) for translating said address information into the address information comprising a first part indicating a transmission resource and a second part indicating the secondary node.

3. Communication network according to claim 2, **characterized in that** the communication network comprises additional address translating means (6) for translating the translated address part back into the address information present in the packets received by the primary node.

4. Communication network according to claim 2, **characterized in that** the communication network comprises intermediate nodes between the primary node and the secondary nodes, and **in that** the intermediate node comprise the additional address translation means (6).

5. Communication network according to claim 2, 3 or 4, **characterized in that** the communication network comprises cross connect means (8) for passing packets to a transmission resource indicated by the first part of the address information, and **in that** the further address translating means (6) are arranged for translating the address information before the packets are applied to the cross connect means (8).

6. Node for use in a communication network being arranged for receiving packet switched data from a further node **characterized in that** the communication network comprises address translating means (10) for determining from a part of the address information in the packet switched data a translated address part having a larger address space than said part of the address information, and **in that** the node comprises routing means to route the packet according to the information in the translated address part.

7. Communication method comprising transmitting packets from a primary node to a secondary node according to address information in said packets, **characterized in that** the communication method comprises determining from a part of the address information a translated address part having a larger address space than said part of the address information, and **in that** the communication method comprises routing the packet according to the information in the translated address part.

8. Communication method according to claim 7, **characterized in that** the method comprises receiving packets including address information identifying the secondary node and **in that** the method comprises translating said address information into the address information comprising a first part indicating a transmission resource and a second part indicating the secondary node.

9. Communication method according claim 8, **characterized in that** the communication method comprises translating the translated address part back into the address information present in the packets received by the primary node.

10. Communication method according to claim 7, 8 or 9, **characterized in that** the communication method comprises passing packets to a transmission resource indicated by the first part of the address information by means of a crossconnect, and **in that** the method comprises translating the address information before the packets enter the crossconnect.

## Patentansprüche

1. Kommunikationsnetz, das mehrere Sekundärknoten umfasst, die mit einem Primärknoten gekoppelt sind, wobei der Primärknoten angeordnet ist, um Pakete zu einem Sekundärknoten gemäß Adressinformationen in den Paketen zu übertragen, **dadurch gekennzeichnet, dass** das Kommunikationsnetz Adressumsetzmittel (10) umfasst, um aus einem Teil der Adressinformationen einen umgesetzten Adressenteil zu ermitteln, der einen größeren Adressraum als der Teil der Adressinformationen aufweist, und **dadurch**, dass das Kommunikationsnetz Lenkungsmittel umfasst, um die Pakete gemäß den Informationen im umgesetzten Adressenteil zu lenken.

2. Kommunikationsnetz nach Anspruch 1, **dadurch gekennzeichnet, dass** der Primärknoten für das Empfangen von Paketen ausgeführt ist, die Adressinformationen beinhalten, die den Sekundärknoten identifizieren, und **dadurch**, dass der Primärknoten weitere Adressumsetzmittel (6) zum Umsetzen der Adressinformationen in die Adressinformationen umfasst, die einen ersten Teil, der eine Übertragungsressource angibt, und einen zweiten Teil umfassen, der den Sekundärknoten angibt.

3. Kommunikationsnetz nach Anspruch 2, **dadurch gekennzeichnet, dass** das Kommunikationsnetz zusätzliche Adressumsetzmittel (6) zum Umsetzen des umgesetzten Adressenteils zurück in die in den Paketen, die durch den Primärknoten empfangen wurden, vorhandenen Adressinformationen umfasst.

4. Kommunikationsnetz nach Anspruch 2, **dadurch gekennzeichnet, dass** das Kommunikationsnetz Transitknoten zwischen dem Primärknoten und den Sekundärknoten umfasst, und **dadurch**, dass der Transitknoten die zusätzlichen Adressumsetzungsmittel (6) umfasst.

5. Kommunikationsnetz nach Anspruch 2, 3 oder 4, **dadurch gekennzeichnet, dass** das Kommunikationsnetz Kanalgruppenumsetzmittel (Crossconnectmittel) (8) zum Weitergeben von Paketen an eine Übertragungsressource umfasst, die durch den ersten Teil der Adressinformationen angegeben ist, und **dadurch**, dass die weiteren Adressumsetzmittel (6) für das Umsetzen der Adressinformationen, bevor die Pakete dem Kanalgruppenumsetzmittel (8) zugewiesen werden, ausgeführt sind.

6. Knoten zur Verwendung in einem Kommunikationsnetz, der für das Empfangen paketvermittelter Daten von einem weiteren Knoten ausgeführt ist, **dadurch gekennzeichnet, dass** das Kommunikationsnetz Adressumsetzmittel (10) umfasst, um aus einem Teil der Adressinformationen in den paketvermittelten Daten einen umgesetzten Adressenteil zu ermitteln, der einen größeren Adressraum als der Teil der Adressinformationen aufweist, und **dadurch**, dass der Knoten Lenkungsmittel umfasst, um die Pakete gemäß den Informationen im umgesetzten Adressenteil zu lenken.

7. Kommunikationsverfahren, das das Übertragen von Paketen von einem Primärknoten zu einem Sekundärknoten gemäß Adressinformationen in den Paketen umfasst, **dadurch gekennzeichnet, dass** das Kommunikationsverfahren umfasst, aus einem Teil der Adressinformationeneinen umgesetzten Adressenteil zu ermitteln, der einen größeren Adressraum als der Teil der Adressinformationen aufweist, und **dadurch**, dass das Kommunikationsverfahren das Lenken der Pakete gemäß den Informationen im umgesetzten Adressenteil umfasst.

8. Kommunikationsverfahren nach Anspruch 7, **dadurch gekennzeichnet, dass** das Verfahren Empfangen von Paketen umfasst, die Adressinformationen beinhalten, die den Sekundärknoten identifizieren, und **dadurch**, dass das Verfahren Umsetzen der Adressinformationen in die Adressinformationen umfasst, die einen ersten Teil, der eine Übertragungsressource angibt, und einen zweiten Teil umfassen, der den Sekundärknoten angibt.

9. Kommunikationsverfahren nach Anspruch 8, **dadurch gekennzeichnet, dass** das Kommunikationsverfahren Umsetzen des umgesetzten Adressenteils zurück in die in den Paketen, die durch den Primärknoten empfangen wurden, vorhandenen Adressinformationen umfasst.

10. Kommunikationsverfahren nach Anspruch 7, 8 oder 9, **dadurch gekennzeichnet, dass** das Kommunikationsverfahren Weitergeben von Paketen mittels eines Kanalgruppenumsetzers an eine Übertragungsressource umfasst, die durch den ersten Teil der Adressinformationen angegeben ist, und **dadurch**, dass das Verfahren Umsetzen der Adressinformationen, bevor das Paket in den Kanalgruppenumsetzer eintritt, umfasst.

## Revendications

1. Réseau de communication comprenant une pluralité de noeuds secondaires qui sont connectés à un noeud primaire, ledit noeud primaire étant à même de transmettre des paquets à un noeud secondaire selon des informations d'adresse présentes dans lesdits paquets, **caractérisé en ce que** le réseau de communication comprend des moyens de traduction d'adresse (10) pour déterminer à partir d'une partie des informations d'adresse une partie d'adresse traduite disposant d'un espace d'adresse supérieur à celui de ladite partie des informations d'adresse, et **en ce que** le réseau de communication comprend des moyens d'acheminement pour acheminer le paquet selon les informations présentes dans la partie d'adresse traduite.

2. Système de communication suivant la revendication 1, **caractérisé en ce que** le noeud primaire est à même de recevoir des paquets comprenant des informations d'adresse identifiant le noeud secondaire et **en ce que** le noeud primaire comprend des moyens de traduction d'adresse (6) supplémentaires pour traduire lesdites informations d'adresse en informations d'adresse comprenant une première partie indiquant une ressource d'émission et une deuxième partie indiquant le noeud secondaire.

3. Système de communication suivant la revendication 2, **caractérisé en ce que** le réseau de communication comprend des moyens de traduction d'adresse (6) supplémentaires pour retraduire la partie d'adresse traduite en informations d'adresse présentes dans les paquets reçus par le noeud primaire.

4. Réseau de communication suivant la revendication 2, **caractérisé en ce que** le réseau de communication comprend des noeuds intermédiaires entre le noeud primaire et les noeuds secondaires, et **en ce que** les noeuds intermédiaires comprennent les moyens de traduction d'adresse (6) supplémentaires.

5. Réseau de communication suivant la revendication 2, 3 ou 4, **caractérisé en ce que** le réseau de communication comprend des moyens d'interconnexion (8) pour transmettre des paquets à une ressource d'émission indiquée par la première partie des informations d'adresse, et **en ce que** les moyens de traduction d'adresse (6) supplémentaires sont à même de traduire les informations d'adresse avant que les paquets ne soient fournis aux moyens d'interconnexion (8).

6. Noeud destiné à être utilisé dans un réseau de communication à même de recevoir des données commutées en paquets d'un autre noeud, **caractérisé en ce que** le réseau de communication comprend des moyens de traduction d'adresse (10) pour déterminer à partir d'une partie des informations d'adresse présentes dans les données commutées en paquets une partie d'adresse traduite ayant un espace d'adresse supérieur à celui de ladite partie des informations d'adresse, et **en ce que** le noeud comprend des moyens d'acheminement pour acheminer le paquet selon les informations présentes dans la partie d'adresse traduite.

7. Procédé de communication comprenant la transmission de paquets d'un noeud primaire à un noeud secondaire selon des informations d'adresse présentes dans lesdits paquets, **caractérisé en ce que** le procédé de communication comprend la détermination à partir d'une partie des informations d'adresse d'une partie d'adresse traduite ayant un espace d'adresse supérieur à celui de ladite partie des informations d'adresse, et **en ce que** le procédé de communication comprend l'acheminement du paquet selon les informations présentes dans la partie d'adresse traduite.

8. Procédé de communication suivant la revendication 7, **caractérisé en ce que** le procédé comprend la réception de paquets incluant des informations d'adresse identifiant le noeud secondaire et **en ce que** le procédé comprend la traduction desdites informations d'adresse en informations d'adresse comprenant une première partie indiquant une ressource de transmission et une deuxième partie indiquant le noeud secondaire.

9. Procédé de communication suivant la revendication 8, **caractérisé en ce que** le procédé de communication comprend la retraduction de la partie d'adresse traduite en informations d'adresse présentes dans les paquets reçus par le noeud primaire.

10. Procédé de communication suivant la revendication 7, 8 ou 9, **caractérisé en ce que** le procédé de communication comprend la transmission de paquets à une ressource d'émission indiquée par la première partie des informations d'adresse au moyen d'une interconnexion, et **en ce que** le procédé comprend la traduction des informations d'adresse avant que les paquets ne parviennent à l'interconnexion.
